# FASCICULE DE BREVET EUROPEEN

(11) **EP 0 397 587 B1**
(45) Date de publication et mention de la délivrance du brevet: **03.08.1994**
(21) Numéro de dépôt: 90460022.8
(22) Date de dépôt: 09.05.1990
(51) Int. Cl.: G02B 6/44

(54) **Module et boîtier de raccordement de câbles à fibres optiques**
Modul und Kabelverbindungsgehäuse mit optischen Fasern
Module and optical fiber cables connecting-box

(30) Priorité: 11.05.1989 FR 8906453
(43) Date de publication de la demande: 14.11.1990
(73) Titulaire: FRANCE TELECOM, 75015 Paris (FR)
(72) Inventeur: Ruello, Yves, F-22300 Lannion (FR); Petit, Régis, F-22700 Perros Guirrec (FR); Ayoul, Gérard, F-22700 Perros Guirrec (FR)
(74) Mandataire: Corlau, Vincent

(56) Documents cités:
- EP-A- 0 204 581
- EP-A- 0 222 691
- FR-A- 2 585 139
- FR-A- 2 588 670
- US-A- 4 266 853
- REVIEW OF THE ELECTRICAL COMMUNICATIONS LABORATORIES, vol. 34, no. 6, novembre 1986, pages 661-667, The Research and Development Headquarters, Nippon Telegraph and Telephone Corp., Tokyo, JP; H. KOBAYASHI et al.: "Optical cable joint cabinets and closures for subscriber loops"

## Description

Le domaine de l'invention est celui des boîtiers de raccordement des câbles à fibres optiques, également connus sous le nom d'organiseurs d'épissures.

De façon connue, un boîtier de raccordement de câbles à fibres optiques doit remplir plusieurs fonctions :
- assurer l'arrêt et le maintien mécanique des éléments constitutifs des câbles de fibres optiques raccordés, notamment le porteur central, le jonc rainuré ou le tube, et les renforts périphériques à mèches ou baguettes, ainsi que la gaine extérieure d'étanchéité ;
- assurer le logement, de façon stable et protégée, des raccords de fibres ainsi que des longueurs de réserve de fibres optiques, sur des supports spécifiques (généralement dénommés cassettes). Des longueurs de réserve sont prévues pour permettre des opérations ultérieures de réépissure des câbles. La fonction de logement doit naturellement respecter les contraintes garantissant un bon fonctionnement des fibres, notamment les contraintes d'étanchéité aux intempéries, et de rayon de courbure minimal des enroulements de fibres ;
- permettre la fixation et le maintien stable des supports et cassettes ;
- fournir un espace de rangement des tronçons de transfert de fibres s'étendant entre les extrémités de câbles d'une part et les supports ou cassettes d'autre part, au sein d'un volume protégé;
- permettre la manipulation des raccords et des fibres, tant au cours du premier montage, que lors des éventuelles réinterventions, et ce sans entraver le fonctionnement des liaisons voisines.

On connaît déjà des boîtiers de raccordement remplissant plus ou moins bien au moins certaines de ces fonctions.

On peut classer ces dispositifs connus en fonction du type de câble auxquels ils s'appliquent. On distingue en effet deux types de câbles à fibres optiques, suivant que les fibres sont maintenues autour du porteur central du câble par jonc rainuré (à pas hélicoïdal ou alterné), ou par tubes de guidage.

Dans le domaine des boîtiers de raccordement pour câbles à tube de renfort, on connaît un dispositif constitué de cassettes en forme de disques évidés, recevant en leur centre les raccords et les longueurs de réserve de fibres. Ces disques sont rangés de façon juxtaposée et coaxiale, et sont extractibles de leur position de rangement, librement et séparément, pour assurer le montage et la maintenance. Ce système connu présente les inconvénients génériques à tous les boîtiers de raccordement existants. Il ne fournit ainsi pas de solution adaptée à tous les types de câbles, mais seulement aux câbles à tubes ; aucune structure originale d'arrêt et de maintien mécanique n'est prévue, dans le cas de fibres optiques à jonc rainuré. D'autre part, la manipulation des fibres optiques impose de déporter les cassettes discoïdales, avec tous les risques et problèmes qui en résultent pour les tronçons de fibres qui y sont reliés.

On connaît également un dispositif de raccordement de câbles à fibres optiques comprenant une pluralité de cassettes de forme sensiblement quadrangulaire, qui peuvent être rangées côte à côte en rateliers ou encore superposées sous forme de "tiroirs" comme décrit dans le document de brevet européen 0 204 581. Un autre dispositif de ce type est décrit dans le document de brevet européen 0 222 691. Ce dispositif stocke des longueurs de réserve dans une cassette pouvant prendre deux positions, une position fermée et une position ouverte, permettant l'accès aux longueurs de réserve. L'ouverture de la cassette entraîne un déplacement important de tronçons de fibres optiques, avec une grande variation de leur rayon de courbure. Ce second type de dispositif connu est plus particulièrement adapté aux câbles à tubes.

Dans le cas des câbles à jonc rainuré, ce type de dispositif comporte des pièces d'épanouissement des câbles, assurant d'une part l'arrêt et le maintien des éléments de câbles, et d'autre part l'individualisation des fibres optiques qui se lovent ensuite à l'intérieur du boîtier de raccordement en direction des cassettes. Ces pièces d'épanouissement sont par exemple du type décrit dans le document de brevet français 2 585 139, ou dans le document de brevet européen 0 225 986. Ces têtes d'épanouissement sont des pièces complexes et onéreuses, dont l'emploi est relativement malaisé (la tête d'épanouissement du brevet 2 585 139 précité prévoit l'injection des fibres dans la tête par fluide comprimé). D'autre part, ces solutions nécessitent une protection des fibres par tubage entre l'extrémité du jonc et l'entrée de la cassette de lovage et d'épissure. L'opération de tubage est rendue obligatoire pour protéger les fibres, du fait que la manipulation des cassettes impose de les déporter sur un plan spécifique de travail pour les opérations de raccordement ou de maintenance.

Le tubage est une contrainte très pénalisante du point de vue des coûts d'intervention sur les boîtiers de raccordement. Il faut noter qu'une opération de retubage est également nécessaire dans le cas de câbles à renfort tubulaire : les tubes utilisés dans ce type de câble présentent en effet généralement une très mauvaise stabilité thermique (dilatation, relaxation, retrait) qui peut notamment induire des contraintes sur les fibres si les rayons de courbure sont faibles, typiquement inférieurs à environ 10 cm. De plus, le non respect de modes opératoires précis et complexes s'est révélé avoir de graves conséquences sur la fiabilité du produit.

D'une façon générale, enfin, les systèmes de raccordement connus n'offrent qu'une très faible accessibilité lors de la maintenance.

L'invention a pour objectif de fournir un boîtier de raccordement modulaire pour câbles à fibres optiques, permettant de pallier notamment ces divers inconvénients des systèmes existants.

Plus précisément, un premier objectif de l'invention est de fournir un module de raccordement de câbles à fibres optiques qui soit conçu de façon à limiter les longueurs de transfert des fibres entre les zones d'épanouissement des câbles, et les cassettes de raccordement et de lovage des longueurs de réserve. La limitation de ces longueurs de transfert, ainsi que des courses de déplacement des tronçons de transfert des fibres doit pouvoir assurer une grande stabilité et fiabilité des raccordements, et permettent ainsi d'éliminer l'opération onéreuse et complexe de tubage des fibres.

Un autre objectif de l'invention est de fournir un module présentant une compatibilité totale avec toutes les sortes de câbles à fibres optiques existants. La conception du boîtier de l'invention permet d'obtenir cette compatibilité à un coût de revient extrêmement faible tant du point de vue des éléments structurels que de leur utilisation.

Un objectif complémentaire de l'invention est de fournir un module de raccordement de réalisation très simple et peu onéreuse, sans aucune pièce complexe, tout en remplissant l'ensemble des autres objectifs.

L'invention a également pour objectif de fournir un module de raccordement présentant une très grande facilité de montage et de maintenance, grâce à une très bonne accessibilité des différents éléments, et à une simplicité de mise en oeuvre des phases de préparation et d'ancrage des câbles, de raccordement des fibres optiques, et de réépissure éventuelle desdites fibres.

Ces objectifs, ainsi que d'autres qui apparaîtront par la suite, sont atteints à l'aide d'un module de raccordement de câbles à fibres optiques selon la revendication 1.

La définition d'un espace protégé d'extension des tronçons de transfert de fibres, combiné à la limitation de la longueur des tronçons de transfert, ainsi qu'au contrôle de leur course (réduite) de déplacement grâce au guidage de l'articulation des cassettes, fournit un module de raccordement aux propriétés d'utilisation performantes pour un coût de revient extrêmement modique. Cela permet en effet de limiter dans cet espace le déplacement des fibres, qui restent de plus hors de contraintes du fait de l'articulation guidée des cassettes. Le tubage des fibres est en outre ainsi rendu inutile, puisque les fibres ne sont plus soumises aux risques et aléas de déplacement, comme cela était le cas lors des déplacements mal contrôlés des cassettes dans les systèmes existants.

Le module de raccordement de l'invention présente un certain nombre de caractéristiques avantageuses, concernant la définition de l'espace protégé d'extension des tronçons de transfert des fibres, la conception des plots d'amarrage des éléments de câbles, la définition d'un espace supplémentaire de lovage des fibres optiques sous le plateau, et la mise en oeuvre du principe d'articulation guidée des cassettes de lovage et de connexion des fibres.

Pour ce qui est de la délimitation de l'espace protégé, le plateau support comporte des joues latérales de protection, sensiblement verticales, délimitant en hauteur ledit espace protégé d'extension des tronçons de transfert des fibres. Lesdites joues sont surmontées d'un capot amovible de fermeture dudit espace protégé d'extension des tronçons de transfert de fibres. Ainsi, lesdits tronçons de transfert de fibres s'étendent essentiellement en ligne droite dans un espace délimité par le plateau support et les joues latérales de protection entre lesdits moyens d'amarrage des éléments du câble, et les entrées de cassettes. L'espace protégé peut également être limité à un espace plus restreint, en fonction de l'implantation et de la forme des cassettes articulées, en particulier dans le cas où le module comprend plusieurs jeux de cassettes.

En ce qui concerne les plots d'amarrage, le module de l'invention comporte avantageusement au moins deux tubulures adjacentes d'entrée de câbles, disposées dans un plan parallèle au plateau support du module, les jeux de moyens alignés d'amarrage des éléments de câbles sur le plateau support s'étendant parallèlement sur ledit plateau support, sensiblement dans l'alignement desdites tubulures d'entrée. Préférentiellement, les moyens d'amarrage de chaque câble présentent entre eux un espacement tel que les fibres provenant d'un câble reçu sur au moins une desdites faces d'entrée du module s'étendent directement sans lovage, dans ledit espace protégé, jusqu'à la cassette de lovage de réserve et de connexion correspondante.

De façon préférentielle, au moins certains desdits moyens d'amarrage des éléments de câbles sont constitués par des plots solidaires du plateau, munis de moyens amovibles de fixation des dits éléments du câble, par vissage ou autre. Le plot d'amarrage du porteur central du câble comporte avantageusement une pièce multi-positions et multi-calibres de réception dudit porteur central.

Comme déjà mentionné, le module de l'invention présente avantageusement un espace de lovage des fibres optiques du côté de la surface du plateau support opposée à la surface d'amarrage des éléments des câbles. Il comporte alors préférentiellement des perçages de traversée des fibres depuis la face d'amarrage vers la face de lovage du plateau support, lesdits perçages de traversée étant aménagés de façon à permettre le lovage des fibres du côté de la face d'accès du module opposée à la face de réception de la terminaison du câble optique correspondant auxdites fibres.

Il est également possible de disposer les différents moyens d'amarrage sur l'une des surfaces du plateau support, et les cassettes articulées sur l'autre surface. On peut aussi prévoir des moyens d'amarrage et/ou des cassettes sur les deux surfaces du plateau. Ces configurations permettent par exemple d'augmenter la taille et/ou le nombre des cassettes, et donc la capacité du module de raccordement.

Malgré les préjugés de la profession en la matière, il ne s'avère pas nécessaire de tuber les fibres pour les faire circuler d'un côté à l'autre du plateau. En effet, les fibres optiques sont fragiles vis à vis de la courbure, mais sont très résistantes en torsion. Une telle configuration, maintenant un rayon de courbure acceptable et peu variable lors des déplacements de cassette, peut donc être mise en oeuvre en conservant la fibre nue sur l'essentiel ou la totalité de la longueur des tronçons de transfert des fibres.

Enfin, en ce qui concerne chaque cassette de lovage et de connexion des fibres, ces moyens d'articulation sont constitués de façon à permettre un déplacement de la cassette entre une première position fonctionnelle de rangement normal de la cassette dans le module, et une seconde position de maintenance, le déplacement de la cassette entre la première et la seconde position s'effectuant selon une course unique guidée qui décrit essentiellement une courbe de rotation, et les entrées de fibres dans la cassette de lovage sont situées du côté de l'axe de rotation de la cassette.

L'axe de rotation de chaque cassette est sensiblement parallèle au plan dudit plateau support, ladite cassette s'étendant dans un plan sensiblement parallèle au plateau support du module dans ladite première position de rangement.

De façon avantageuse, ledit plateau support comporte au moins un jeu d'au moins deux cassettes de lovage et de raccordement, les cassettes d'un même jeu s'étendant de façon essentiellement superposée, parallèlement au plateau support, dans la première position de rangement, et étant déplaçables chacune vers la seconde position de maintenance de façon à dégager l'accès à la cassette inférieure de l'ensemble superposé. Chaque jeu d'au moins deux cassettes comporte avantageusement une cassette fixe.

De façon préférentielle, les moyens d'articulation de la cassette sont constitués par au moins un levier de basculement solidaire de ladite cassette, et monté à rotation sur ledit plateau support, ledit levier coopérant avec les moyens d'immobilisation temporaire par encliquetage de la cassette en position de maintenance.

L'invention concerne également un boîtier de raccordement des câbles à fibres optiques caractérisé en ce qu'il comporte au moins un module de raccordement présentant tout ou partie des caractéristiques précédentes, inséré entre deux demi-coquilles d'étanchéité.

D'autres caractéristiques et avantages de l'invention apparaîtront à la lecture de la description suivante d'un mode de réalisation préférentiel du module de raccordement de câbles à fibres optiques de l'invention, donné à titre illustratif et non limitatif, et des dessins annexés, dans lesquels :
- la figure 1 représente une vue en perspective éclatée, d'un mode de réalisation du module de raccordement de câbles à fibres optiques, selon l'invention, comprenant six alvéoles symétriques de réception de câbles réparties sur deux faces d'accès symétriques, avec la représentation de la demi-coquille supérieure du boîtier de logement du module ;
- la figure 2 est une vue de dessus du module de la figure 1, schématisé avec quatre câbles à fibres optiques montés et raccordés en configuration "1 vers 3";
- la figure 3 illustre l'exemple de raccordement selon la configuration "1 vers 3", au moyen d'un boîtier de raccordement selon les figures 1 et 2 ;
- la figure 4 schématise le principe d'amarrage d'un câble à joncs rainurés dans un module suivant l'invention ;
- la figure 5 est une vue de côté du module de la figure 2, avec une cassette de lovage et de raccordement placée en position relevée de maintenance;

Le module de raccordement de l'invention est compatible avec différents types de câbles à fibres optiques existants.

Un premier type de câbles est constitué d'un jonc rainuré, monté autour d'un porteur central. Le jonc rainuré comporte soit des rainures hélicoïdales, soit des rainures en SZ (pas alterné). On peut compter jusqu'à six fibres par rainure. Le matériau constitutif du jonc rainuré est par exemple le PVC, le polyéthylène, ou le polypropylène. Ce type de câble comporte en outre généralement un tube de maintien des fibres optiques dans les rainures, constitué par exemple d'un tube extrudé en polyéthylène, ou encore d'un ruban de Terphane (marque déposée), tissé ou non tissé. Le tube de maintien est lui-même entouré généralement d'un renfort périphérique, soit sous forme de fibres de Kevlar (marque déposée) éventuellement graissées, et gonflées au moyen d'une poudre hydrophile de type CMC, à rôle d'étanchéification du câble, soit sous forme de baguettes plates (par exemple en verre) formant des renforts rigides le long de génératrices du câble. La gaine extérieure du câble est avantageusement en polyéthylène haute densité.

Un second type de structure de câble comporte un jeu de tubulures souples renfermant chacune jusqu'à six fibres, et torsadées en pas hélicoïdal ou alterné autour du porteur central. Ces tubulures remplacent le jonc rainuré. Elles sont par exemple en polyester, en polypropylène, ou en PBTP (polybutylène téréphtalate). Les moyens de renfort périphérique, fibreux ou en baguettes rigides, sont également employés dans ce type de câble, de la même manière que pour les câbles à jonc rainuré.

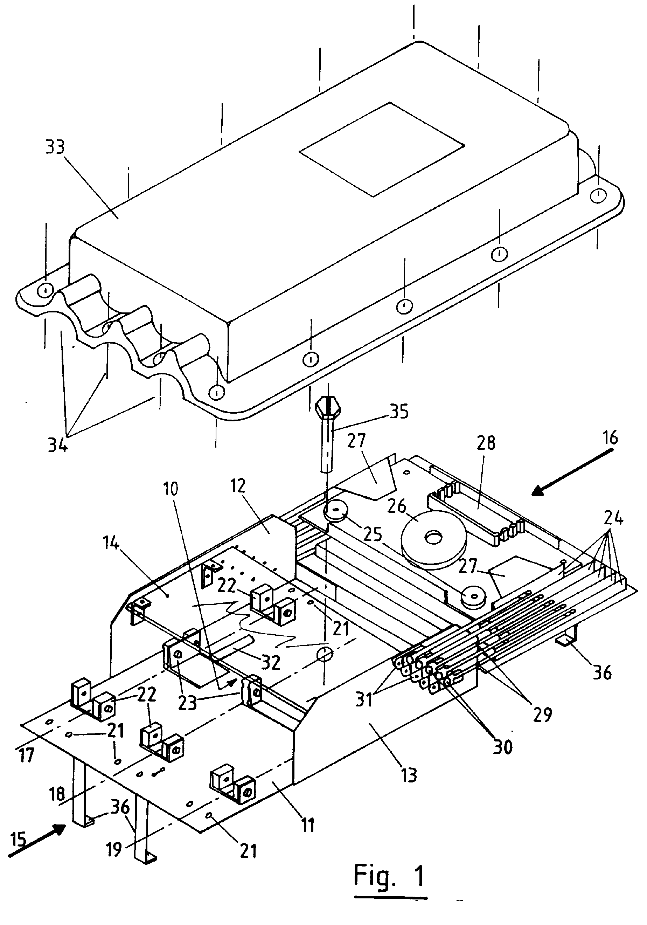

Comme représenté en figure 1, l'exemple de réalisation de module de raccordement, selon l'invention, comprend un espace protégé 10 d'extension des tronçons de transfert de fibres optiques. Cet espace 10 est, dans cet exemple, délimité par un plateau support 11, et une paire de joues latérales 12,13 de protection, surmontées d'un capot amovible 14 de fermeture partielle de l'espace protégé 10. Dans cet espace 10, les fibres optiques peuvent d'étendre sans protection particulière, et notamment sans tubage.

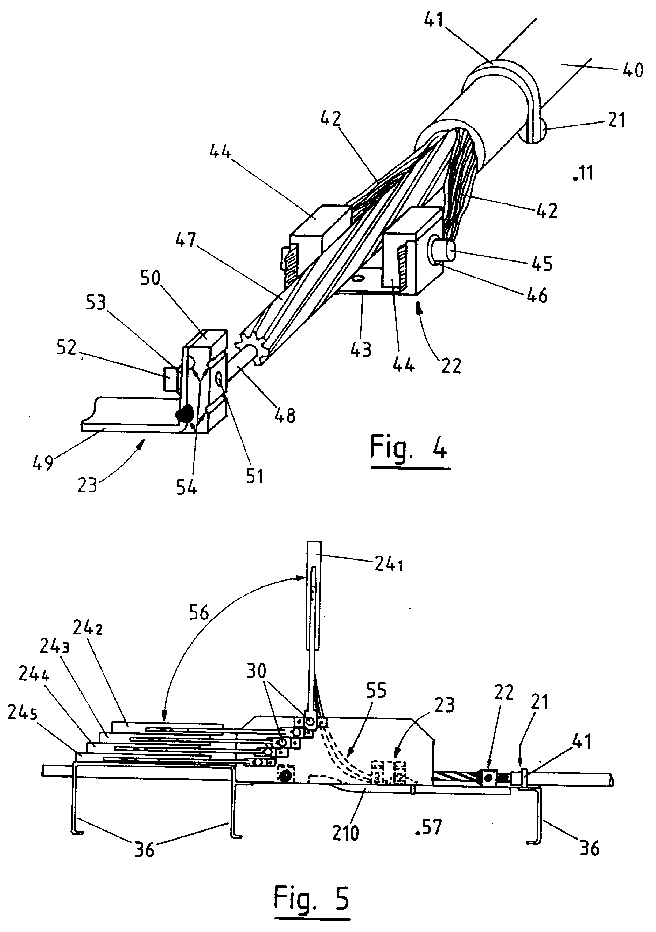

On notera que cette caractéristique avantageuse est due notamment au fait que les tronçons de transfert des fibres accèdent aux cassettes du côté de l'axe de rotation 30 des cassettes. Avantageusement, comme représenté en figures 1 et 5, ces axes 30 s'étendent horizontalement, parallèlement à la surface du plateau support 11.

Le module comporte un première face d'accès 15, que l'on appellera par la suite "face avant" par souci de simplification, et une seconde face d'accès 16, dite ci-après "face arrière".

Sur le plateau 11 sont disposés trois jeux 17, 18, 19 de moyens alignés et séparés d'amarrage des éléments constitutifs des câbles à fibres optiques. Ces moyens d'amarrage comprennent chacun respectivement des orifices 21 de fixation d'un collier d'immobilisation de la gaine extérieure d'un câble, des plots 22 de fixation des joncs rainurés d'une part et des mèches ou baguettes périphériques de renfort d'autre part, et enfin des plots 23 d'ancrage du porteur central.

Du côté de la face arrière d'accès 16, sont superposées cinq cassettes 24 de lovage et de connexion des fibres optiques. Ces cassettes comprennent des plots 25,26 de renvoi et de guidage des longueurs de réserve de fibres, des rabats 27 de guidage et de protection des fibres lovées, ainsi qu'un râtelier 28 de logement des raccords d'épissure des fibres optiques.

Les cassettes sont articulées au moyen de bras pivotants 29 autour d'axes de rotation 30 situés sur les joues latérales 12,13. Les axes de rotation sont par exemple montés sur des supports d'axe 31 rivés sur les joues 12,13.

L'axe 17 d'alignement de moyen d'amarrage des câbles comporte deux jeux symétriques d'orifices 21 et de plots 22,23, de façon à recevoir, sur le même axe 17, deux câbles introduits respectivement par la face d'accès 15 et par la face d'accès 16.

Les fibres du câble introduit par la face d'accès 16 peuvent plonger sous le plateau 11, à travers l'orifice de traversée 32, de façon à venir se lover sous le plateau 11, du côté de la face d'accès 15, puis ressortir par un second orifice de traversée (non apparent) orientant les fibres optiques en direction des cassettes 24.

Comme suggéré par la forme de la demi-coquille supérieure 33, représentée en éclaté sur la figure 1, les câbles sont introduits dans le boîtier à travers des alvéoles 34, recevant par exemple des brides d'arrimage des câbles, collés dans les alvéoles 34. On peut envisager d'admettre un ou plusieurs câbles par bride (et donc par alvéole 34), en fonction de la capacité en fibres optiques des câbles d'une part et du module d'autre part. L'étanchéification des alvéoles et des brides d'admission des câbles s'effectue par exemple par injection de résine, ou autre, dans les brides.

La solidarisation du module et des demi-coquilles s'effectue par exemple par vis 35, et pattes de fixation 36.

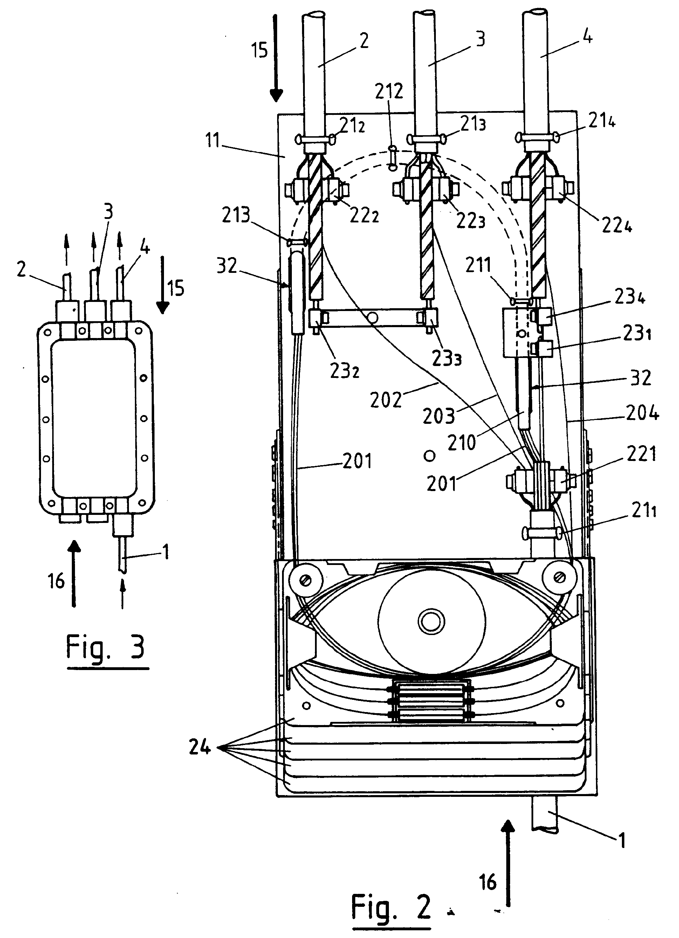

La figure 2 représente, en vue de dessus, le module de la figure 1, avec quatre fibres optiques montées. La configuration de montage correspond à la connexion "1 vers 3" dans laquelle les fibres optiques du câble 1 sont distribuées et connectées à certaines des fibres optiques des câbles 2, 3 et 4.

Cette configuration de montage est illustrée en figure 3. Elle correspond à un raccordement en ligne, selon lequel le câble d'entrée 1 est introduit en face d'accès 16 opposée à la face d'accès 15 des trois câbles de sortie 2,3,4. Mais, avec le même module, il est possible de réaliser des configurations différentes, par exemple selon un raccordement en épi dans lequel les câbles d'entrée et de sortie sont introduits par une même face d'accès. Il est également possible d'introduire plusieurs câbles par un même orifice d'accès, par exemple trois câbles en triangle; dans ce cas, on peut prévoir que les plots d'amarrage 21, 22, 23 présentent des éléments de fixation et d'ancrage superposés correspondant chacun à au moins un des câbles introduits par le même orifice d'accès.

Comme représenté en figure 2, chacun des câbles 1, 2, 3, 4 est fixé aux moyens d'amarrage des éléments de câbles de la manière suivante :
- les gaines extérieures d'étanchéité sont fixées dans les colliers passés dans les orifices 21*₁*, 21*₂*, 21*₃*, 21*₄* ;
- les joncs rainurés des câbles sont guidés entre les étriers des plots 22*₁*, 22*₂*, 22*₃*, 22*₄*, alors que les mèches ou les baguettes sont arrimées latéralement dans lesdits plots ;
- les porteurs centraux sont ancrés dans des plots 23*₁*, 23*₂*, 23*₃*, 23*₄*.

En sortie de jonc, au niveau des plots 22*₁*, 22*₂*, 22*₃*, 22*₄*, les fibres optiques 202, 203, 204 des câbles 2, 3, 4 rejoignent directement les cassettes 24. En revanche, les fibres 201 issues du câble 1 introduit par la face d'accès arrière 16 sont guidées sous le plateau support 10, dans un tube 210 débouchant sur la face supérieure du plateau 11 à travers les orifices traversants 32. Sous le plateau 11, les fibres optiques présentent un rayon de courbure compatible avec les exigences de service. Les fibres 201 rejoignent ensuite les cassettes 24. Le guidage des fibres 201 sous le plateau peut également s'effectuer par des tronçons de tubes, ou encore par simple collier d'amarrage 211,212,213, avec ou non tube de guidage 210.

La longueur des tronçons de transfert traversant l'espace protégé est par exemple de dix centimètres, c'est-à-dire environ deux à trois profondeurs de cassette 24. Cette longueur correspond à une zone d'épanouissement et de brassage des fibres, permettant de respecter les exigences de service quant aux rayons de courbure des fibres.

La figure 4 est une vue agrandie des moyens alignés d'amarrage d'un câble à jonc central rainuré. Bien que ce type de câble soit retenu pour présenter le mode de réalisation détaillé de l'invention, il est clair que le module de raccordement est compatible avec des câbles à tubes de guidage des fibres.

La gaine 40 du câble est maintenue dans le collier 41 passé dans les orifices 21 du plateau support 11. Les mèches 42 de maintien du câble sont fixées par serrage plan sur plan, aux extrémités latérales du plot 22. A cet effet, le plot 22 est constitué d'un étrier en U 43 sur les bords relevés duquel sont rapportées deux joues de fixation 44 symétriques. Les joues 44 sont munies d'un orifice taraudé, pour le vissage d'un boulon 45 avec une rondelle frein 46. Les mèches 42, sont pincées entre une joue de fixation 44 et le montant relevé correspondant de l'étrier 43. Le cas échéant, ce sont les baguettes de renfort, substituables aux mèches dans certains types de câbles, qui sont immobilisées entre les pièces 43 et 44.

L'intervalle central de l'étrier 43 localise approximativement la zone d'arrêt du jonc 47, ou le cas échéant d'arrêt des tubes de guidage de fibres.

Enfin, le porteur central 48 est serré dans le plot 23. Ce plot est avantageusement constitué d'un étrier 49, dont le bord relevé reçoit une cale 50 amovible, multi-positions et multi-calibres. Cette cale 50 est munie d'un orifice taraudé 51 coopérant avec un boulon 52 et une rondelle-frein 53 pour le serrage sur l'étrier 49. La cale multi-positions et multi-calibres 50 est représentée avec quatre rainures 54 de réception du porteur central 48. Chaque rainure 54 correspond à un calibre différent (par exemple de 1,6 mm à 3,1 mm de diamètre), ce qui rend le plot 23 compatible avec différents types de câbles existants. Le cas échéant, il est possible de prévoir plusieurs types de cales multi-calibres et multi-positions 54, de façon à élargir la compatibilité, avec les câbles existants ou à venir. Il est avantageux de pouvoir effectuer un serrage du porteur 48 égal ou supérieur à 40 daN, assurant un ancrage satisfaisant du câble dans le module de raccordement.

La figure 5 est une vue de profil illustrant le principe de mobilité des cassettes 24 du module de l'invention, permettant de limiter et de maîtriser parfaitement la course de déplacement des tronçons de transfert des fibres optiques 55. La mobilité des cassettes 24*₁*, 24*₂*, 24*₃*, 24*₄*, et éventuellement 24*₅*, selon une course circulaire 56 autour des axes de rotation 30, est rendue nécessaire de façon à dégager l'accès des cassettes inférieures.

La cassette 24*₅* peut toutefois être directement fixée au plateau support 11, puisque sa mobilité ne s'impose pas du fait qu'elle ne recouvre aucune autre cassette.

L'immobilisation en position haute de maintenance (cassette 24*₁* en figure 5) est par exemple réalisée avec des moyens d'encliquetage temporaire, ou équivalents.

Les tronçons de transfert 55 de fibres optiques ont un mouvement très limité dans l'espace protégé d'extension, notamment pour les raisons suivantes :
- la nature rotative et limitée de la course 56 de déplacement des cassettes 24,
- l'accès des tronçons de transfert 55 dans les cassettes 24 du côté de l'axe de rotation des cassettes ;
- la disposition des axes de rotation 30 des cassettes, parallèlement à la surface du plateau support, et au plan de lovage des fibres dans les cassettes ;
- l'alignement des moyens d'amarrage du câble sur le plateau support, qui imprime une direction d'extension aux fibres en en limitant la liberté de mouvement.

Ainsi, à aucun moment il n'est possible de sortir du domaine de sécurité de fonctionnement (rayon de courbure, impossibilité de coincement, ...). Ce principe permet en outre de dégager un plan de travail, au montage ou à la maintenance, d'une très grande clarté (voir figure 2), rendant quasi inexistants les risques de mauvais montage.

Deux prototypes ont été câblés selon la configuration des figures 2 et 3. Le temps de montage et le coût des pièces s'est avéré être inférieur de plus de 50 % à celui des systèmes existants. Les caractéristiques thermiques et mécaniques satisfont largement les spécifications.

Avantageusement, l'utilisation du module de raccordement de l'invention s'effectue en deux phases ;
- une première phase de préparation des câbles, d'épanouissement des tronçons de transfert des fibres optiques et de passage des longueurs de réserve dans les cassettes de lovage et de raccordement ;
- une seconde phase de raccordement proprement dit des fibres dans les cassettes.

La première phase comprend les étapes de dénudage des câbles, de fixation des câbles dans les colliers 21, 41, de fixation des renforts périphériques à mèches ou baguettes dans les plots 22, d'arrêt du jonc rainuré ou des tubes de guidage entre les plots 22 et 23, et d'ancrage du porteur central 48 dans le plot 23. Il comprend également les étapes d'épanouissement des fibres optiques du câble, d'extension des tronçons de transfert dans l'espace protégé 10, et de lovage des extrémités des tronçons de transfert autour des plots de guidage 25,26 des cassettes 24. Les longueurs de réserve sont déterminées de façon à permettre plusieurs réépissures successives.

Cette première phase implique une intervention d'un premier opérateur, dans des conditions parfois difficiles du fait que les câbles et les fibres sont enduits de graisse de protection.

La seconde phase peut être envisagée après nettoyage du plan de travail, éventuellement au cours d'une intervention d'un second opérateur. Cette seconde phase présente les étapes de délovage des fibres prélovées à la phase précédente dans les cassettes 24, ceci étant réalisé cassette par cassette. Après délovage, on raccorde fibre à fibre, par collage, soudure, épissure mécanique ou autre. L'invention accepte tout type de raccord. Au moment où toutes les épissures ont été réalisées, et logées dans les râteliers 28, on procède enfin au relovage des fibres dans la cassette 24, avant de passer à la cassette suivante. Cette seconde phase correspond également aux diverses opérations de maintenance.

La capacité des cassettes 24 peut être par exemple 6/6 fibres, 10/10 fibres, 12/12 fibres, ou encore toute autre capacité.

Plusieurs modules de raccordement tels que représentés en figures 1 et 2 peuvent être superposés ou juxtaposés au sein d'un même boîtier.

De plus, la capacité d'un module donné peut être doublée en prévoyant un jeu de cassettes 24 également du côté de la face d'accès 15.

Dans un même jeu, notamment si celui-ci est en position centrale, on peut disposer les axes de rotation des cassettes sur au moins deux faces dudit jeu. Ainsi, il est possible qu'une cassette sur deux, de façon intercalée, pivote dans un certain sens, et que les autres cassettes pivotent dans le sens opposé. Cela permet de limiter l'encombrement des moyens de rotation, et d'accéder simultanément à au moins deux cassettes en position de maintenance.

L'implantation, la forme, la capacité des cassettes et du module de raccordement, ainsi que les nombres de cassettes et de jeux de cassettes peuvent être modifiés sans quitter le cadre de l'invention.

## Revendications

1. Module de raccordement de câbles à fibres optiques, recevant les terminaisons de câbles à raccorder sur au moins une des deux faces d'accès opposées, et abritant des moyens de fixation desdites terminaisons, des moyens d'épanouissement des fibres contenues dans les câbles, et au moins une cassette (24) logeant des lovages de réserve des fibres et les épissures de liaison desdites fibres raccordées et articulée sur un plateau-support,
module caractérisée en ce que chaque câble est notamment du type comprenant, insérée dans une gaine extérieure d'étanchéité, (40), une pluralité de fibres optiques (201, 202, 203, 55)maintenues autour d'un porteur central (48) par jonc rainuré ou tube et renforts périphériques à mèches ou baguettes de maintien, et que les moyens de fixation comportent un jeu de moyens (21,22,23) alignés et séparés d'amarrage de la gaine extérieure (40), des renforts périphériques (42), et du porteur central (48) respectivement de chaque câble (1,2,3,4), et en ce que le plateau support (11) est pourvu de joues latérales (13) et un capot (14) délimitant sur au moins une partie de la surface dudit plateau-support (11) un espace protégé en permanence (10) d'extension des tronçons de fibres (201,202,203,55) sortant des câbles et entrant dans les cassettes, l'articulation de ladite au moins une cassette ayant une course de déplacement (56) sensiblement circulaire autour d'un axe de rotation (30) sensiblement parallèle au plan dudit plateau support (11).

2. Module selon la revendication 1 caractérisé en ce qu'il comporte au moins deux orifices adjacents (34) d'entrée de câbles, disposées dans un plan parallèle au plateau support (11) du module, les jeux de moyens alignés (21,22,23) d'amarrage des éléments de câbles sur le plateau support s'étendant parallèlement sur ledit plateau support (11), sensiblement dans l'alignement desdits orifices d'entrée (34).

3. Module selon l'une quelconque des revendications 1 et 2 caractérisé en ce que les moyens d'amarrage de chaque câble présentent entre eux un espacement tel que les fibres (202,203,204) provenant d'un câble (2,3,4) reçu sur au moins une ce que les moyens d'amarrage de chaque câble présentent entre eux un espacement tel que les fibres (202,203,204) provenant d'un câble (2,3,4) reçu sur au moins une (15) desdites faces d'accès du module s'étendent directement sans lovage, dans ledit espace protégé (10), jusqu'à la cassette (24) de lovage et de connexion correspondante.

4. Module selon l'une quelconque des revendications 1 à 3 caractérisé en ce que les moyens d'articulation de chaque cassette de lovage (24) et de connexion des fibres sont constitués de façon à permettre un déplacement de la cassette (24) entre une première (24₂,24₃,24₄,24₅) position fonctionnelle de rangement normal de la cassette dans le module, et une seconde position (24₁) de maintenance, le déplacement de la cassette (24) entre la première et la seconde position s'effectuant selon une course unique guidée (56).

5. Module selon l'une quelconque des revendications 1 à 4 caractérisé en ce que ladite cassette (24) s'étend dans un plan sensiblement parallèle au plateau support (11) du module dans ladite première position de rangement.

6. Module selon l'une quelconque des revendications 1 à 5 caractérisé en ce que ledit plateau support comporte au moins un jeu d'au moins deux cassettes (24) de lovage et de raccordement,
et en ce que les cassettes (24) d'un même jeu s'étendent de façon essentiellement superposée, parallèlement au plateau support (11), dans la première position de rangement, et sont déplaçables chacune (24ᵢ) vers la seconde position de maintenance de façon à dégager l'accès à la cassette inférieure (24ᵢ₊₁)de l'ensemble superposé.

7. Module selon l'une quelconque des revendications 1 à 6 caractérisé en ce qu'il comporte au moins une cassette fixe.

8. Module selon l'une des revendications 1 à 7 caractérisé en ce que lesdits tronçons de transfert de fibres entre lesdits moyens d'amarrage des éléments du câble et lesdites entrées de cassettes s'étendent essentiellement en ligne droite dans un espace délimité par le plateau support (11) et les joues latérales de protection.

9. Module selon l'une quelconque des revendications 1 à 8 caractérisé en ce qu'il présente un espace (57) de lovage de fibres optiques (201) du côté de la surface du plateau support (11) opposée à la surface d'amarrage des éléments des câbles.

10. Module selon la revendication 9 caractérisé en ce qu'il comporte des perçages (32) de traversée de fibres (201) depuis la surface d'amarrage vers la surface de lovage du plateau support (11), lesdits perçages de traversée (32) étant aménagés de façon à permettre le lovage des fibres (201) du côté de la face d'accès du module opposée à la face de réception (16) de la terminaison du câble optique correspondant auxdites fibres (201).

11. Module selon l'une quelconque des revendications 1 à 10, caractérisé en ce que des moyens de réception des cassettes sont implantés sur la surface du plateau support (11) opposée à la surface d'amarrage des éléments des câbles.

12. Module selon l'une quelconque des revendications 1 à 11 caractérisé en ce que au moins certains desdits moyens d'amarrage des éléments de câbles sont constitués par des plots (22,23) solidaires du plateau, munis de moyens amovibles (44,50) de fixation desdits éléments du câble, par vissage (45,52) ou autre.

13. Module selon la revendication 12 caractérisé en ce que le plot d'amarrage (23) du porteur central (48) du câble comporte une cale (50) multipositions et multicalibres de réception dudit porteur central (48).

14. Module selon l'une des revendications 1 à 13 caractérisé en ce que les moyens d'articulation de la cassette sont constitués par au moins un levier de basculement (29) solidaire de ladite cassette (24), et monté à rotation sur ledit plateau support (11), ledit levier (29)coopérant avec des moyens d'immobilisation temporaire par encliquetage de la cassette en position de maintenance.

15. Boîtier de raccordement de câbles à fibres optiques caractérisé en ce qu'il comporte au moins un module de raccordement selon l'une quelconque des revendications 1 à 14, inséré entre deux demi-coquilles d'étanchéité.

## Patentansprüche

1. Modul für die Verbindung optischer Faserkabel, das die Enden der zu verbindenden Kabel auf mindestens einer der zwei gegenüberliegenden Zugangsflächen aufnimmt und welches Mittel zum Befestigen der Enden, Mittel zum Ausfächern der in den Kabeln enthaltenen Fasern und mindestens eine auf einer Trägerplatte schwenkbar angeordnete Kassette (24), in der sich Reserveschlaufen der in den Kabeln enthaltenen Fasern sowie die Spleißungen der zusammengefügten Fasern befinden, enthält; dadurch gekennzeichnet, daß jedes Kabel unter anderem von der Art ist, das eine Vielzahl optischer Fasern (201, 202, 203, 55) in einer äußeren wasserdichten Hülle (40) enthält, die um einen mittleren Träger (48) mittels eines gerillten Kerndrahts oder mittels eines Rohrs und ringförmiger Umfangsverstärkungen oder mittels stabförmiger Halterungen gehalten werden, daß die Befestigungsmittel einen Satz aneinandergereihter und getrennter Mittel (21, 22, 23) zur Befestigung der äußeren Hülle (40), zur Befestigung der ringförmigen Umfangsverstärkungen (42) sowie zur Befestigung des mittleren Trägers (48) der jeweils einzelnen Kabel (1, 2, 3, 4) enthalten und daß die Trägerplatte (11) über seitliche Wangen (13) und über eine Haube (14) verfügt, welche wenigstens über einem Teil der Fläche der Trägerplatte (11) einen dauerhaft geschützten Verlängerungsraum (10) der aus den Kabeln ragenden und in die Kassetten eintretenden Faserstücke (201, 202, 203, 55) begrenzen, wobei das Gelenk der mindestens einen Kassette eine etwa kreisförmige Laufbahn (56) um eine Rotationsachse (30) beschreibt, die annähernd parallel zur Ebene der Trägerplatte (11) ist.

2. Modul gemäß Anspruch 1, dadurch gekennzeichnet, daß es mindestens zwei nebeneinanderliegende Kabeleintrittsöffnungen (34) hat, die in einer senkrecht zur Modulträgerplatte (11) stehenden Ebene angeordnet sind, wobei die aneinandergereihten Befestigungsmittel (21, 22, 23) der Kabel auf der Trägerplatte parallel zueinander auf der Trägerplatte (11) ausgebreitet sind und im wesentlichen mit den Eingangsöffnungen (34) fluchten.

3. Modul gemäß einem der Ansprüche 1 oder 2, dadurch gekennzeichnet, daß die Befestigungsmittel eines jeden Kabels untereinander durch einen Trennraum derart getrennt sind, daß die Fasern (202, 203, 204), die von einem Kabel (2, 3, 4) kommen, welches über mindestens eine der Modulzugangsflächen (15) aufgenommen wird, sich direkt und ohne Schlaufen durch den geschützten Raum (10) bis zur entsprechenden Verschlaufungs- und Verbindungskassette (24) hinziehen können.

4. Modul gemäß einem der Ansprüche 1 bis 3, dadurch gekennzeichnet, daß die Gelenke einer jeden Verschlaufungs- und Verbindungskassette (24) der Fasern derart ausgebildet sind, daß sie die Bewegung der Kassette (24) zwischen einer ersten Funktionsposition (24₂, 24₃, 24₄, 24₅) für die normale Unterbringung der Kassette im Modul und einer zweiten Wartungsposition (24₁) ermöglichen, wobei die Bewegung der Kassette (24) zwischen der ersten und der zweiten Position entlang einer einzigen geführten Laufbahn (56) erfolgt.

5. Modul gemäß einem der Ansprüche 1 bis 4, dadurch gekennzeichnet, daß die Kassette (24) sich in der ersten Unterbringungsposition in einer Ebene befindet, die in etwa parallel zur Modulträgerplatte (11) ist.

6. Modul gemäß einem der Ansprüche 1 bis 5, dadurch gekennzeichnet, daß die Trägerplatte mindestens einen Satz von mindestens zwei Verschlaufungs- und Verbindungskassetten (24) trägt, daß die Kassetten (24) eines Satzes im wesentlichen in der ersten Unterbringungsposition parallel zur Trägerplatte (11) übereinander liegen, wobei jede Kassette derart in die zweite Wartungsposition (24ᵢ) bewegt werden kann, daß der Zugang zur darunter liegenden Kassette (24ᵢ₊₁) des übereinander liegenden Satzes freigegeben wird.

7. Modul gemäß einem der Ansprüche 1 bis 6, dadurch gekennzeichnet, daß es mindestens eine festliegende Kassette enthält.

8. Modul gemäß einem der Ansprüche 1 bis 7, dadurch gekennzeichnet, daß die Übergangsstücke der Fasern zwischen den Befestigungsmitteln der Kabelelemente und den Kassetteneingängen im wesentlichen geradlinig innerhalb eines Raumes ausgebreitet sind, welcher durch die Trägerplatte (11) und den seitlichen Schutzwangen begrenzt ist.

9. Modul gemäß einem der Ansprüche 1 bis 8, dadurch gekennzeichnet, daß es einen Verschlaufungsraum (57) der optischen Fasern (201) auf der Fläche der Trägerplatte (11) aufweist, die der Befestigungsfläche der Kabelelemente gegenüberliegt.

10. Modul gemäß Anspruch 9, dadurch gekennzeichnet, daß es Bohrungen (32) für den Durchgang der Fasern (201) von der Befestigungsfläche zur Verschlaufungsfläche der Trägerplatte (11) aufweist, wobei die Durchgangsbohrungen (32) derart angebracht sind, daß sie die Verschlaufung der Fasern (201) auf der Modulzugangsfläche ermöglichen, die der Empfangsfläche (16) für das Ende des der Fasern (201) entsprechenden optischen Kabels gegenüberliegt.

11. Modul gemäß einem der Ansprüche 1 bis 10, dadurch gekennzeichnet, daß Aufnahmemittel für die Kassetten auf der Oberfläche der Trägerplatte (11) angebracht sind, die der Befestigungsfläche für die Kabelelemente gegenüberliegt.

12. Modul gemäß einem der Ansprüche 1 bis 11, dadurch gekennzeichnet, daß mindestens einige der Befestigungselemente der Kabel aus Befestigungselementen (22, 23) bestehen, die mittels Schrauben (45, 52) oder auf andere Weise an der Trägerplatte befestigt sind und die mit lösbaren Mitteln (44, 50) zur Befestigung der Kabelelemente ausgestattet sind.

13. Modul gemäß Anspruch 12, dadurch gekennzeichnet, daß das Befestigungsteil (23) des mittleren Kabelträgers (48) über einen Aufnahmeklotz (50) mit mehreren Positionen und mehreren Durchmessern für den mittleren Kabelträger (48) verfügt.

14. Modul gemäß einem der Ansprüche 1 bis 13, dadurch gekennzeichnet, daß die Gelenke der Kassette aus mindestens einem Kipphebel (29) bestehen, welcher Teil der Kassette (24) und drehbar auf der Trägerplatte (11) befestigt ist, wobei der Hebel (29) mit zeitlich begrenzt wirkenden Festhaltemitteln durch Einrasten der Kassette in der Wartungsposition zusammenwirkt.

15. Gehäuse für die Verbindung optischer Faserkabel, dadurch gekennzeichnet, daß es mindestens ein Verbindungsmodul gemäß einem der Ansprüche 1 bis 14 zwischen zwei wasserdichten Halbgehäusen enthält.

## Claims

1. Optical fibre cable connecting module receiving the terminations of cables to be connected on at least one of the two opposite access faces, and sheltering means for fastening the said terminations, means for spreading the fibres contained in the cables, and at least one cartridge (24) which houses fibre reserve coils and the splices for linking the said connected fibres and which is hinged to a supporting plate, which module is characterized in that each cable is in particular of the type comprising, inserted into an external sealing sheath (40), a plurality of optical fibres (201, 202, 203, 55) retained around a central strength member (48) by grooved keeper or tube and stranded peripheral reinforcements or retention rods, and in that the fastening means include a set of aligned and separate means (21, 22, 23) for lashing the external sheath (40), the peripheral reinforcements (42), and the central strength member (48) respectively of each cable (1, 2, 3, 4) and in that the supporting plate (11) is provided with lateral cheeks (13) and a hood (14) delimiting over at least part of the surface of the said supporting plate (11) a permanently protected space (10) of extension of the fibre spans (201, 202, 203, 55) exiting from the cables and entering the cartridges, the hinging of the said at least one cartridge having a substantially circular path of displacement (56) about an axis of rotation (30) substantially parallel to the plane of the said supporting plate (11).

2. Module according to Claim 1, characterized in that it includes at leat two adjacent cable-entry holes (34) arranged in a plane perpendicular to the supporting plate (11) of the module, the sets of aligned means (21, 22, 23) for lashing the elements of cables to the supporting plate extending parallel to the said supporting plate (11), substantially in the alignment of the said entry holes (34).

3. Module according to either one of Claims 1 and 2, characterized in that the means for lashing each cable have between them a spacing such that the fibres (202, 203, 204) coming from a cable (2, 3, 4) received on at least one (15) of the said access faces of the module extend directly without coiling, into the said protected space (10), up to the corresponding coiling and connection cartridge (24).

4. Module according to any one of Claims 1 to 3, characterized in that the hinging means of each fibre coiling and connection cartridge (24) are constructed so as to allow displacement of the cartridge (24) between a first (24₂, 24₃, 24₄, 24₅) functional position of normal storage of the cartridge in the module, and a second position (24₁) of maintenance, the displacement of the cartridge (24) between the first and second positions taking place along a single guided path (56).

5. Module according to any one of Claims 1 to 4, characterized in that the said cartridge (24) extends in a plane substantially parallel to the supporting plate (11) of the module in the said first storage position.

6. Module according to any one of Claims 1 to 5, characterized in that the said supporting plate includes at least one set of at least two coiling and connecting cartridges (24), and in that the cartridges (24) of any one set extend in an essentially superposed fashion, parallel to the supporting plate (11), in the first storage position, and are each (24ᵢ) displaceable to the second maintenance position so as to clear the access to the lower cartridge (24ᵢ₊₁) of the superposed assembly.

7. Module according to any one of Claims 1 to 6, characterized in that it includes at least one fixed cartridge.

8. Module according to one of Claims 1 to 7, characterized in that the said fibre transfer spans between the said means for lashing the elements of the cable and the said cartridge entrances extend essentially in a straight line within a space delimited by the supporting plate (11) and the lateral protection cheeks.

9. Module according to any one of Claims 1 to 8, characterized in that it exhibits a space (57) for coiling optical fibres (201) on the side of that surface of the supporting plate (11) opposite the surface for lashing the elements of the cables.

10. Module according to Claim 9, characterized in that it includes perforations (32) for crossing fibres (201) from the lashing surface to the coiling surface of the supporting plate (11), the said crossing perforations (32) being made so as to allow the coiling of the fibres (201) on the side of that access face of the module opposite the face (16) for receiving the termination of the optical cable corresponding to the said fibres (201).

11. Module according to any one of Claims 1 to 10, characterized in that means for receiving cartridges are laid out over that surface of the supporting plate (11) opposite the surface for lashing the elements of the cables.

12. Module according to any one of Claims 1 to 11, characterized in that at least some of the said means for lashing cable elements consist of studs (22, 23) solid with the plate and provided with removable means (44, 50) for fastening the said elements of the cable, by screwing (45, 52) or otherwise.

13. Module according to Claim 12, characterized in that the lashing stud (23) for the central strength member (48) of the cable includes a multiposition and multicalibre shim (50) for receiving the said central strength member (48).

14. Module according to one of Claims 1 to 13, characterized in that the hinging means of the cartridge consist of at least one rocking lever (29) solid with the said cartridge (24), and mounted rotationally on the said supporting plate (11), the said lever (29) cooperating with means for temporary immobilization of the cassette in the maintenance position by snap-fit.

15. Optical fibre cable connecting box characterized in that it includes at least one connecting module according to any one of Claims 1 to 14, inserted between two sealing half-shells.
